# EUROPÄISCHE PATENTSCHRIFT

(11) **EP 1 518 039 B1**
(45) Veröffentlichungstag und Bekanntmachung des Hinweises auf die Patenterteilung: **22.08.2007**
(21) Anmeldenummer: 02779095.5
(22) Anmeldetag: 02.12.2002
(51) Int. Cl.: F01K 21/04, F02C 7/143

(54) **VERFAHREN ZUM BETREIBEN EINER GASTURBINENANLAGE UND GASTURBINENANLAGE**
METHOD FOR OPERATING A GAS TURBINE INSTALLATION, AND GAS TURBINE INSTALLATION
PROCEDE DE FONCTIONNEMENT D'UNE INSTALLATION DE TURBINES A GAZ ET INSTALLATION DE TURBINES A GAZ

(30) Priorität: 13.06.2002 CH 101002
(43) Veröffentlichungstag der Anmeldung: 30.03.2005
(73) Patentinhaber: Alstom Technology Ltd, 5400 Baden (CH)
(72) Erfinder: JIMENEZ HÄRTEL, Carlos, 81247 München (DE); SAVIC, Sasha, CH-5430 Wettingen (CH); ZINN, Hanspeter, CH-5406 Baden-Rütihof (CH)
(86) Internationale Anmeldenummer: PCT/CH2002/000651
(87) Internationale Veröffentlichungsnummer: WO 2003/106817

(56) Entgegenhaltungen:
- EP-A- 0 781 909
- WO-A-97/43530
- DE-A- 19 900 026
- US-B1- 6 250 064

## Beschreibung

Die vorliegende Erfindung betrifft ein Verfahren zum Betreiben einer Gasturbinenanlage gemäss dem Oberbegriff des Anspruchs 1 und eine Gasturbinenanlage gemäss dem Oberbegriff des Anspruchs 10. Ein solches Verfahren und eine solche Anlage sind aus Dokument WO-A-97 43 530 schon bekannt.

### STAND DER TECHNIK

Es ist aus dem Stand der Technik bekannt, dass zur Leistungssteigerung von Gasturbinen der Massenstrom des Verdichters gekühlt werden kann. Eine Kühlung des Luftmassenstroms, der von der Gasturbine aufgenommen wird, führt zu einer erhöhten Leistungsabgabe der Maschine. Die Gründe hierfür sind zum einen der durch die Kühlung erhöhte Massenstrom an Luft, sowie die Verringerung der Leistungsaufnahme eines Kompressors bei geringeren Eintrittstemperaturen. Grundsätzlich sind zwei Arten der Kühlung bekannt: eine Kühlung der Eintrittsluft, welche in den Verdichter strömt, und eine Zwischenkühlung zwischen zwei getrennten Verdichterstufen.

Eine Zwischenkühlung der Luft während der Kompression, wie sie aus DE-A1-42 37 665 bekannt ist, verringert die Leistungsaufnahme eines Turboverdichters in Folge Verringerung der Kompressionsarbeit. Im Gegensatz zur Eintrittskühlung wird hierbei aber keine Vergrösserung des Luftmassenstroms erzielt. In den meisten Fällen werden für die Zwischenkühlung klassische Wärmetauscher eingesetzt.

In letzter Zeit gibt es verstärkt Bemühungen, die gewünschte Kühlung sowohl bei Eintrittskühlung als auch bei Zwischenkühlung durch Einspritzen von Wasser zu erreichen. Für die Zwischenkühlung ist dies beispielhaft aus EP-A1-0 770 771 bekannt. Hierbei wird bisher ausschliesslich das Konzept einer Kühlung durch Verdampfung verfolgt, bei der dem Luftstrom fein atomisiertes, demineralisiertes Wasser zugegeben wird. Bei der Zwischenkühlung geschieht dies im Innern des Kompressors zwischen einzelnen Verdichterstufen (sogenanntes "spray intercooling"), bei der Eintrittskühlung dagegen bereits stromauf des Kompressors im Lufteinlass. Die Zugabe von Wassertropfen bewirkt, dass der Verdichter stromab der Eingabestelle teilweise "nass" betrieben wird, also mit einem 2-phasigen Medium. Selbst für relativ geringe Mengen eingespritzten Wassers von nur 1-1,5% (bezogen auf den angesaugten Luftmassenstrom) kann sich der nasse Bereich des Verdichters über 5-8 Stufen erstrecken. Die Länge des nassen Verdichterteils ist dabei nicht nur eine Funktion der zugegebenen Wassermenge, sondern hängt zudem vom Tropfenspektrum ab, sowie von der Eintrittstemperatur der Luft. Erst nach vollständiger Verdampfung des Wassers arbeitet der Verdichter wieder mit trockenem Gas. Im bisherigen "nassen" Betrieb des Verdichters werden keine speziellen Vorkehrungen getroffen, die es erlauben zu bestimmen, welches Tropfenspektrum in der vom Verdichter eingesaugten Luft vorherrscht, sowie welches Tropfenspektrum sich innerhalb des Verdichters einstellt. Während das Tropfenspektrum im angesaugten Luftstrom von der eingesetzten Spraytechnik, der Geschwindigkeitsverteilung im Lufteinlass und der Positionierung der Sprayeinrichtung abhängt, wird das (sich stromab laufend verändernde) Tropfenspektrum im Verdichter von der Druckänderung im Kompressor, der Temperaturerhöhung, sowie ganz allgemein von den aerodynamischen Eigenschaften der Kompressorströmung beeinflusst.

Besondere Schwierigkeiten ergeben sich bei der Anwendung des "nassen" Betriebs eines Verdichters daraus, dass die Tropfen im Verdichter einerseits mit hoher Geschwindigkeit auf Schaufeln und andere Oberflächen auftreffen können, und andererseits zur Bildung von Wasserfilmen auf den Schaufeln und am Gehäuse führen. Dies bringt eine Reihe von Problemen mit sich, von denen hier nur 4 exemplarisch genannt sein sollen:
**(I)** die aerodynamischen Eigenschaften der Schaufeln verändern sich,
**(II)** Wasser kann in Kühlluftleitungen und andere Komponenten des Kühlluftsystems eindringen und die Turbinenkühlung beeinträchtigen,
**(III)** vorhandene Druck- und Temperatursensoren liefern andere Messergebnisse, je nachdem ob sie trocken oder nass sind,
**(IV)** die auftreffenden Wassertropfen können die Schaufeln und andere Strukturteile erodieren und durch Filmbildung zu erhöhter Korrosion führen. Dabei sind Art und Umfang der Filmbildung, wie auch die Stärke des Tropfenaufschlags stark vom Tropfenspektrum in der 2-Phasenströmung abhängig.

Diese Beispiele zeigen, dass es für die Überwachung der Gasturbine und des "nassen" Betriebs des Verdichter - und somit für die Gewährleistung eines sicheren Betriebs - von grossem Interesse ist, vorhandenes flüssiges Wasser im Verdichter und im Sekundärluftsystem detektieren bzw. das Tropfenspektrum im Strömungskanal des Verdichters bestimmen zu können. Die bislang in kommerziellen Gasturbinen-Anlagen installierten Messeinrichtungen sind hierfür allerdings nicht geeignet. Eine sichere Bestimmung des Vorhandenseins von Wasser im Verdichter, die Bestimmung der Ausdehnung des nassen Bereichs bzw. des Tropfenspektrums im Verdichter ist deshalb in derartigen Anlagen heute nicht möglich.

### DARSTELLUNG DER ERFINDUNG

Der Erfindung liegt demnach die Aufgabe zugrunde, ein Verfahren zum Betrieb einer Gasturbinenanlage anzugeben, mit welchem nasse und trockene Verdichterstufen, das Tropfenspektrum im Verdichter sowie das mögliche Vorhandensein von Wasser in den Kühlluftsystemen festgestellt werden können.

Erfindungsgemäss wird die Aufgabe durch ein Verfahren gemäss dem Oberbegriff des Anspruchs 1 dadurch gelöst, dass mit Hilfe von Flüssigkeitssensoren gemessen wird, an welcher Stelle oder in welchem Bereich innerhalb des Verdichters und/oder des Kühlluftsystems eine flüssige Phase vorhanden ist. So kann beispielsweise der Teilbereich des Verdichters, in welchem eine Zweiphasenströmung vorhanden ist, bestimmt werden.

Unter "flüssiger Phase" sollen hier sowohl mögliche Flüssigkeitsfilme auf den Oberflächen, als auch die im Luftstrom befindlichen Tropfen verstanden werden. Bezüglich der Messung der flüssigen Phase durch die genannten Sensoren gilt:
1. Für die Erkennung von Flüssigkeitsfilmen können als Flüssigkeitssensoren vorteilhaft Wasserdetektoren eingesetzt werden, die nach dem Leitfähigkeitsprinzip arbeiten. Weitere geeignete Messtechniken sind laseroptische Verfahren, die nach dem Rückstreuungsprinzip arbeiten und so ggf. auch die Messung der Dicke eines Flüssigkeitsfilms erlauben.
2. Für die Messung von Tröpfchen in der Gasphase können als Flüssigkietssensoren geeigneterweise sogenannte laseroptische droplet sizer eingesetzt werden. Diese können z.B. nach einem Diffraktionsverfahren arbeiten, oder nach dem Prinzip der Phasen-Doppler Anemometrie. Besonders vorteilhaft ist auch hier ein Messverfahren, das auf dem Prinzip der Rückstreuung von Laserlicht beruht (z.B. ein Laser-Speckle Verfahren), da in diesem Fall nur ein einziger optischer Zugang erforderlich ist, d.h. Sende- und Empfangseinheit können in einem Sensorkopf integriert werden.

Durch das erfindungsgemässe Verfahren ist eine Identifikation der nassen und trockenen Bereiche innerhalb des Verdichters und des Kühlluftsystems möglich. Bei der Verwendung mehrerer Sensoren über mehrere Verdichterstufen und grössere Teile des Kühlluftsystems hinweg ist eine Beobachtung des aktuellen Betriebszustands des Verdichters und des Kühlluftsystems zur Identifikation der nassen und der trockenen Bereiche möglich. Die Menge des in den Verdichter eingespritzten flüssigen Mediums kann dann in Abhängigkeit vom identifizierten Bereich und/oder vom identifizierten Tropfenspektrum geregelt werden. Auch die Gasturbine kann in Abhängigkeit vom identifizierten Bereich und/oder vom bestimmten Tropfenspektrum geregelt werden.

Sind eine Vielzahl von Flüssigkeitssensoren über den Umfang des Verdichterraums vorhanden, kann die Umfangsverteilung der flüssigen Phase identifiziert werden. Je nach eingesetztem Flüssigkeitssensor kann auch die Qualität, d.h. die chemische Zusammensetzung, des flüssigen Mediums überwacht werden.

In einem vorteilhaften-Ausführungsbeispiel handelt es sich bei dem gasförmigen Medium in dem Verdichter um Luft und bei dem flüssigen Medium um Wasser, welches in die Luft eingespritzt wird.

Erfindungsgemäss wird die Aufgabe durch einen Verdichter gemäss dem Oberbegriff des Anspruchs 10 dadurch gelöst, dass Flüssigkeitssensoren entlang der Innenwand des Verdichters, entlang der Oberfläche der Welle des Verdichters, der Oberfläche der Beschaufelung des Verdichters und/oder an einer Wand des Kühlluftsystems vorhanden sind.

Die Flüssigkeitssensoren können also vorteilhaft an der Innenwand des Verdichters, der Oberfläche der Welle des Verdichters, der Oberfläche der Beschaufelung des Verdichters oder an einer Wand des Kühlluftsystems vorhanden sein.

Die Flüssigkeitssensoren an der Verdichterwand und/oder der Wand des Kühlluftsystems können bündig mit der Wandfläche positioniert sein. Die Befestigung geschieht entweder permanent oder durch eine Einschraub- oder Flanschlösung, die es erlaubt, den Flüssigkeitssensor zu entfernen und zu ersetzen. Eine Anordnung von mehreren Flüssigkeitssensoren über den Umfang des Verdichters ermöglicht die Onlineanalyse der Umfangsverteilung der eingespritzten Wassermenge. Die Flüssigkeitssensoren kann mit einer Systemüberwachungseinheit verbunden sein.

### WEGE ZUR AUSFÜHRUNG DER ERFINDUNG

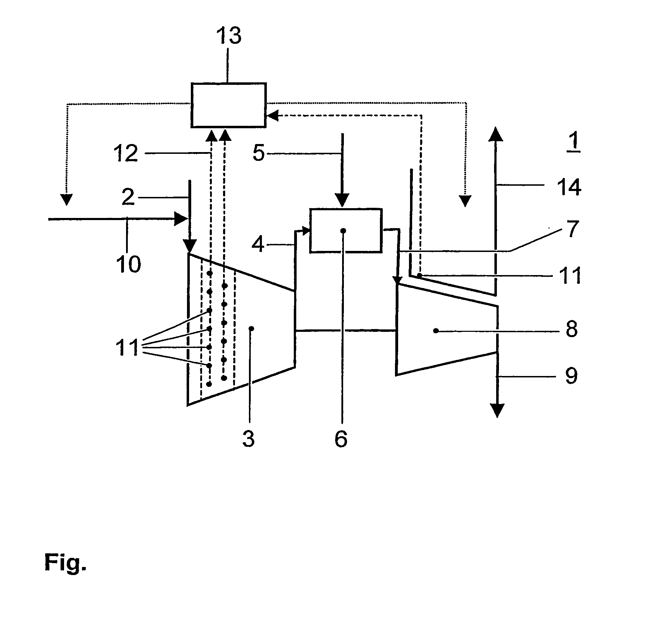

Die einzige Figur stellt eine Gasturbineanlage 1 dar. Luft 2 wird von einem Verdichter 3 angesaugt. Die verdichtete Luft 4 wird zusammen mit Brennstoff 5 in einer Brennkammer 6 zur Erzeugung von Heissgasen 7 verbrannt. Danach werden die Heissgase 7 in eine Turbine 8 geleitet, die einen nicht dargestellten Generator zur Erzeugung von elektrischer Energie antreibt. Die entstehenden Abgase 9 können in einem Abhitzedampfererzeuger oder auf eine andere Weise weiter verwendet werden. Zur Leistungssteigerung wird in den Verdichter 3 Wasser 10 eingespritzt. Dies kann, wie in der einzigen Figur dargestellt, in die angesaugte Luft 2 sein, oder auch in bestimmte Stufen des Verdichters 3 geschehen. Auf diese Weise entsteht in einem bestimmten Bereich des Verdichters 3 eine Zweiphasenströmung mit einer gasförmigen und einer flüssigen Phase. Sobald das eingespritzte Wasser 10 verdampft ist, wandelt sich die Zweiphasenströmung wieder in eine Einphasenströmung mit nur einer Gasphase. Des weiteren werden die heissen Bauteile der Gasturbinenanlage 1 durch Kühlluft 14, welche durch ein schematisch dargestelltes Kühlluftsystem strömt, während des Betriebs der Anlage gekühlt.

Erfindungsgemäss sind im Verdichterraum des Verdichters 3 zur Identifikation von Tropfen in der Gasphase, bzw. zur Identifikation von Flüssigkeitsfilmen auf den bespülten Oberflächen des Schaufelkanals des Verdichters 3 und/oder im Kühlluftsystem, Flüssigkeitssensoren 11 angeordnet. Zu diesem Zweck sind Flüssigkeitssensoren 11 montiert, dessen Messelement in den Verdichterraum oder in das Kühlsystem reicht und bündig mit der Wandfläche positioniert sein kann. Die Befestigung geschieht entweder permanent oder durch eine Einschraub- oder Flanschlösung, die es erlaubt, den Flüssigkeitssensor 11 zu entfernen und zu ersetzen. Die Erfindung erstreckt sich auf Flüssigkeitssensoren 11 jeglichen Messprinzips, das einen zuverlässigen Einsatz unter den typischen Betriebsbedingungen einer Gasturbineanlage 1 zulässt.

Im vorliegenden Anwendungsfall können zur Messung der Flüssigkeitsfilme insbesondere Wasserdetektoren verwendet werden, die nach einem Leitfähigkeitsmessverfahren arbeiten. Dabei wird der elektrische Widerstand des Umgebungsmediums am freien Ende eines Sondenkörpers gemessen. Die Unterschiede im elektrischen Widerstand von Luft und Wasser erlauben die Detektion vorhandener Flüssigkeit. Als Speisespannung für Wasserdetektoren nach solchem Messprinzip kann vorteilhaft Wechselspannung verwendet werden, um Sättigungseffekte durch Elektrolyse am Wasserfilm zu verhindern. Alternativ können auch laseroptische Verfahren nach dem Rückstreuungsprinzip eingesetzt werden, die zudem die Messung der Dicke des Flüssigkeitsfilms erlauben.

Die Erfindung bezieht sich auch auf eine Bestimmung des Tropfenspektrums an geeigneten Positionen im Strömungskanal des Verdichters zwecks einer Überwachung des "nassen" Betriebs des Verdichters. Diese Überwachung kann sich sowohl auf den Massenstrom beziehen (z.B. ermittelbar über die gemessene Dichte des Sprays) als auch auf die Qualität der Atomisierung durch das Spraysystem. Durch eine solche Überwachung können Qualitätsmängel und Fehlfunktionen des Systems rechtzeitig detektiert werden, oder auch eine etwaige alterungs- oder verschleissbedingte Verschlechterung des Systemverhaltens. Letzteres kann beispielsweise durch partielle oder vollständige Verstopfung von Düsen oder durch deren Erosion bedingt sein. Die vorliegende Erfindung zur Bestimmung des Tropfenspektrums erstreckt sich Messanordnungen jeglichen Messprinzips, das einen zuverlässigen Einsatz unter den typischen Betriebsbedingungen einer Gasturbine zulässt. Insbesondere können solche verwendet werden, die nach einem laseroptischen Diffraktionsmessverfahren arbeiten. Weitere geeignete Messverfahren umfassen Phasen-Doppler Anemometry, Schattenrisstechniken (shadowgraphy) sowie Verfahren nach dem Prinzip der Analyse rückgestreuten Laserlichts, wie z.B. das Laser-Speckle Verfahren. Zur Erfindung gehört ein an dem Verdichter montierter Sensor, der (je nach Messprinzip) das Tropfenspektrum in einem (Teil-)Volumen, längs eines Strahls, oder in einer Messebene innerhalb des Strömungskanals misst. Etwaige Sende- und Empfangseinheiten sind zudem so angebracht, dass Schwingungen des Verdichters im Betrieb nicht direkt auf die Messeinrichtung übertragen werden. Eine solche Aufhängung ist insbesondere bei optischen Messverfahren von Vorteil, da bei diesen Methoden hohe Anforderungen an Vibrationsarmut erfüllt werden müssen.

Verbindungen 12 zur Signalübertragung verbinden die Flüssigkeitssensoren 11 mit einer Auswerteeinheit bzw. Systemüberwachung 13, welche die Signale misst und in geeignete Ausgangssignale wandelt. Die Verbindungen 12 sind entsprechend den Signalanforderungen gegen Störungen abgeschirmt. Weitere Auswertungen (z.B. Speicherung der Daten für eine Trendanalyse), beziehungsweise Systemüberwachungsfunktionen können ebenfalls in der Auswerteeinheit 13 integriert sein. Die Signalübertragung an die Auswerteeinheit 13 geschieht auf die übliche Art, d.h. durch z.B. 4-20mA, binäre Voltsignale oder digitale Signale.

Durch das erfindungsgemässe Verfahren ist eine Identifikation der nassen und trockenen Bereiche innerhalb des Verdichters 3 und die Feststellung eines möglichen Eindringens von Wasser in das Kühlluftsystem der Gasturbineanlage 1 sowie eine Bestimmung des Tropfenspektrums im Verdichter möglich. Bei der Verwendung mehrerer Flüssigkeitssensoren 11 zur Bestimmung des Tropfenspektrums über mehrere Verdichterstufen und grössere Teile des Kühlluftsystems hinweg ist eine umfassende Beobachtung des aktuellen Betriebszustands des Verdichters und des Kühlluftsystems hinsichtlich des Vorhandenseins von Flüssigkeitsfilmen auf den fraglichen Oberflächen und/oder hinsichtlich des Vorhandenseins von Tropfen in der Gasphase möglich. Eine Anordnung von mehreren Flüssigkeitssensoren 11 über den Umfang des Verdichters 3 ermöglicht zudem die Onlineanalyse der Umfangsverteilung (Gleichförmigkeit) der eingespritzten Wassermenge.

Wie in der einzigen Figur durch die gepunkteten Linien angedeutet, können die zusätzlichen Messsignale grundsätzlich für das Schutz- und Fahrkonzept der Gasturbinenanlage 1 bei Wassereinspritzung genutzt werden, so z.B. für Trip Signale, als Signal zur Regelung der Gasturbinenanlage 1, als Signale für die Regelung der eingespritzten Menge von Wasser 10 zur Auslösung von Schutzvorgängen (z.B. Reduktion der eingespritzten Wassermenge oder andere Änderungen von einstellbaren Maschinenparametern) im Fall des Über- oder Unterschreitens von vorgegebenen Limiten. Auch eine Korrelation der Ausgabesignale der Detektoren 11 bzw. der Auswerteeinheit 13 mit anderen Betriebskenngrössen wie Temperaturen, Drücken, Emissionen oder anderen Gasturbinenparametern zwecks Vorhersage des Maschinenzustandes mit dem Ziel der Optimierung des Betriebsverhaltens, der Vermeidung kritischer Betriebszustände oder anderer Anwendungen, etc. ist denkbar. Die gewonnene Information kann beispielsweise auch zur Anpassung der Verdichtercharakteristik im Performancemodell der Gasturbinenanlage 1 verwendet werden, sowie zur Bestimmung des aktuellen Pumpgrenzenabstands im Betrieb.

### BEZUGSZEICHENLISTE

- 1: Gasturbineanlage
- 2: Gasförmiges Medium, Luft
- 3: Verdichter
- 4: Verdichtete Luft
- 5: Brennstoff
- 6: Brennkammer
- 7: Heissgase
- 8: Turbine
- 9: Abgase
- 10: Flüssiges Medium, Wasser
- 11: Flüssigkeitssensor
- 12: Verbindung
- 13: Auswerteeinheit, Systemüberwachung
- 14: Kühlluft

## Patentansprüche

1. Verfahren zum Betreiben einer Gasturbinenanlage (1),
- wobei ein gasförmiges Medium (2) vom Verdichter (3) angesaugt und im Verdichterraum verdichtet wird und in das gasförmige Medium (3) ein flüssiges Medium (10) eingespritzt wird, so dass mindestens in einem Teilbereich des Verdichters (3) eine Zweiphasenströmung mit einer gasförmigen und einer flüssigen Phase entsteht,
- das gasförmige Medium (2) in einer Brennkammer (6) mit Brennstoff (5) zu Heissgasen (7) verbrannt wird,
- die Heissgase (7) in einer Turbine (8) entspannt werden und
- die heissen Bauteile der Gasturbinenanlage (1) durch Kühlluft (14) eines Kühlluftsystems gekühlt werden,
**dadurch gekennzeichnet, dass**
mit Hilfe von Flüssigkeitssensoren (11) gemessen wird, an welcher Stelle oder in welchem Bereich innerhalb des Verdichters (3) und/oder des Kühlluftsystems eine flüssige Phase vorhanden ist.

2. Verfahren nach Anspruch 1,
**dadurch gekennzeichnet, dass**
der Teilbereich des Verdichters (3), in welchem eine Zweiphasenströmung vorhanden ist, bestimmt wird.

3. Verfahren nach Anspruch 1 oder 2,
**dadurch gekennzeichnet, dass**
die Dicke eines vorhandenen Flüssigkeitsfilms bestimmt wird.

4. Verfahren nach Anspruch 1 oder 2,
**dadurch gekennzeichnet, dass**
das Tropfenspektrum der Zweiphasenströmung innerhalb des Verdichters (3) an einer speziellen Stelle oder in einem bestimmten Bereich bestimmt wird.

5. Verfahren nach Anspruch 1 bis 4,
**dadurch gekennzeichnet, dass**
die Menge des in den Verdichter (3) eingespritzten flüssigen Mediums in Abhängigkeit vom identifizierten Bereich und/oder vom identifizierten Tropfenspektrum geregelt wird.

6. Verfahren nach Anspruch 1 bis 4,
**dadurch gekennzeichnet, dass**
die Umfangsverteilung der flüssigen Phase im Verdichter (3) festgestellt wird.

7. Verfahren nach Anspruch 1 bis 4,
**dadurch gekennzeichnet, dass**
die chemische Zusammensetzung des flüssigen Mediums gemessen wird.

8. Verfahren nach Anspruch 1 bis 4,
**dadurch gekennzeichnet, dass**
die Turbine (8) in Abhängigkeit vom identifizierten Bereich und/oder vom bestimmten Tropfenspektrum geregelt wird.

9. Verfahren nach einem der vorrangegangen Ansprüche,
**dadurch gekennzeichnet, dass**
Luft als gasförmiges Medium (2) in dem Verdichter verdichtet und Wasser als flüssiges Medium (10) in das gasförmige Medium eingespritzt wird.

10. Gasturbinenanlage (1) zur Durchführung des Verfahrens nach einem der Ansprüche 1 bis 8, umfassend einen Verdichter (3) mit einem Verdichterraum, eine Brennkammer (6), eine Turbine (8) und ein Kühlluftsystem
**dadurch gekennzeichnet, dass**
Flüssigkeitssensoren (11) entlang der Innenwand des Verdichters (3), der Oberfläche der Welle des Verdichters (3), der Oberfläche der Beschaufelung des Verdichters (3) und/oder an einer Wand des Kühlluftsystems vorhanden sind.

11. Gasturbinenanlage (1) nach Anspruch 10,
**dadurch gekennzeichnet, dass**
die Flüssigkeitssensoren (11) bündig mit der Wandfläche des Verdichterraums und/oder des Kühlluftsystems montiert sind.

12. Gasturbinenanlage (1) nach Anspruch 10 oder 11,
**dadurch gekennzeichnet, dass**
die Flüssigkeitssensoren (11) Wasserdetektoren sind, die nach einem Leitfähigkeitsmessverfahren arbeiten.

13. Gasturbinenanlage (1) nach Anspruch 10 oder 11,
**dadurch gekennzeichnet, dass**
im Verdichter (3) als Flüssigkeitssensoren (11) Messinstrumente zur Bestimmung der Tropfengrösse der flüssigen Phase der Zweiphasenströmung vorhanden sind.

14. Gasturbinenanlage (1) nach Anspruch 13,
**dadurch gekennzeichnet, dass**
als Messinstrumente zur Bestimmung der Tropfengrösse ein Diffraktometer, ein Phasen-Doppler Anemometer oder ein Laser-Speckle Apparate vorhanden sind.

15. Gasturbinenanlage (1) nach Anspruch 10 bis 14,
**dadurch gekennzeichnet, dass**
die Flüssigkeitssensoren (11) lösbar im Verdichterraum und/oder im Kühlluftsystem montiert sind.

16. Gasturbinenanlage (1) nach Anspruch 10 bis 14,
**dadurch gekennzeichnet, dass**
die Flüssigkeitssensoren (11) über den Umfang der Wand des Verdichterraums montiert sind.

17. Gasturbinenanlage (1) nach Anspruch 10 bis 14,
**dadurch gekennzeichnet, dass**
die Flüssigkeitssensoren (11) mit einer Auswerteeinheit bzw. Systemüberwachungseinheit (13) verbunden sind.

## Claims

1. Method for operating a gas turbine installation (1),
- in which a gaseous medium (2) is sucked in by the compressor (3) and compressed in the compressor space, and a liquid medium (10) is injected into the gaseous medium (2), so that a two-phase flow comprising a gaseous phase and a liquid phase is formed at least in a subregion of the compressor (3),
- the gaseous medium (2) is burnt with fuel (5) in a combustion chamber (6) to form hot gases (7),
- the hot gases (7) are expanded in a turbine (8), and
- the hot components of the gas turbine installation (1) are cooled by cooling air (14) of a cooling air system,
**characterized in that**
liquid sensors (11) are used to measure at which location or in which region a liquid phase is present inside the compressor (3) and/or the cooling air system.

2. Method according to claim 1, **characterized in that** the subregion of the compressor (3) in which a two-phase flow is present is determined.

3. Method according to claim 1 or 2, **characterized in that** the thickness of a liquid film which is present is determined.

4. Method according to claim 1 or 2, **characterized in that** the drop size spectrum of the two-phase flow within the compressor (3) is determined at a specific location or in a defined region.

5. Method according to claims 1 to 4, **characterized in that** the quantity of liquid medium injected into the compressor (3) is closed loop controlled as a function of the identified region and/or the identified drop size spectrum.

6. Method according to claims 1 to 4, **characterized in that** the circumferential distribution of the liquid phase in the compressor (3) is determined.

7. Method according to claims 1 to 4, **characterized in that** the chemical composition of the liquid medium is measured.

8. Method according to claims 1 to 4, **characterized in that** the turbine (8) is closed loop controlled as a function of the identified region and/or of the determined drop size spectrum.

9. Method according to one of the preceding claims, **characterized in that** air is the gaseous medium (2) compressed in the compressor and water is the liquid medium (10) injected into the gaseous medium.

10. Gas turbine installation (1) for carrying out the method according to one of claims 1 to 8, comprising a compressor (3) having a compressor space, a combustion chamber (6), a turbine (8) and a cooling air system,
**characterized in that**
there are liquid sensors (11) along the inner wall of the compressor (3), the surface of the shaft of the compressor (3), the surface of the blading of the compressor (3) and/or on a wall of the cooling air system.

11. Gas turbine installation (1) according to claim 10, **characterized in that** liquid sensors (11) are mounted flush with the wall surface of the compressor space and/or the cooling air system.

12. Gas turbine installation (1) according to claim 10 or 11, **characterized in that** the liquid sensors (11) are water detectors which operate according to a conductivity-measuring method.

13. Gas turbine installation (1) according to claim 10 or 11, **characterized in that** measurement instruments for determining the drop size of the liquid phase of the two-phase flow are present as liquid sensors (11) in the compressor (3).

14. Gas turbine installation (1) according to claim 13, **characterized in that** a diffractometer, a phase-Doppler anemometer or a laser speckle apparatus are present as measurement instruments for determining the drop size.

15. Gas turbine installation (1) according to claims 10 to 14, **characterized in that** the liquid sensors (11) are mounted releasably in the compressor space and/or in the cooling-air system.

16. Gas turbine installation (1) according to claims 10 to 14, **characterized in that** the liquid sensors (11) are mounted over the circumference of the wall of the compressor space.

17. Gas turbine installation (1) according to claims 10 to 14, **characterized in that** the liquid sensors (11) are connected to an evaluation unit or system monitoring unit (13).

## Revendications

1. Procédé pour faire fonctionner une installation à turbine à gaz (1), un fluide gazeux (2) étant aspiré par le compresseur (3) et comprimé dans la chambre de compression et un fluide liquide (10) étant injecté dans le fluide gazeux (2) de sorte qu'il se produit un écoulement à deux phases comprenant une phase gazeuse et une phase liquide dans au moins une zone partielle du compresseur (3), le fluide gazeux (2) étant consumé dans une chambre de combustion (6) avec du combustible (5) pour produire des gaz chauds (7), les gaz chauds (7) étant détendus dans une turbine (8) et les composants chauds de l'installation à turbine à gaz (1) étant refroidis par de l'air de refroidissement (14) d'un système d'air de refroidissement, **caractérisé en ce qu'**une mesure est réalisée à l'aide de détecteurs de liquide (11) pour déterminer à quel endroit ou dans quelle zone à l'intérieur du compresseur (3) et/ou du système d'air de refroidissement il existe une phase liquide.

2. Procédé selon la revendication 1, **caractérisé en ce que** la zone partielle du compresseur (3) dans laquelle il existe un écoulement à deux phases est déterminée.

3. Procédé selon la revendication 1 ou 2, **caractérisé en ce que** l'épaisseur d'un film de liquide présent est déterminée.

4. Procédé selon la revendication 1 ou 2, **caractérisé en ce que** le spectre des gouttes de l'écoulement à deux phases à l'intérieur du compresseur (3) est déterminé en un endroit spécial ou dans une zone donnée.

5. Procédé selon les revendications 1 à 4, **caractérisé en ce que** le volume de fluide liquide injecté dans le compresseur (3) est régulé en fonction de la zone identifiée et/ou du spectre des gouttes identifié.

6. Procédé selon les revendications 1 à 4, **caractérisé en ce que** la répartition circonférentielle de la phase liquide dans le compresseur (3) est déterminée.

7. Procédé selon les revendications 1 à 4, **caractérisé en ce que** la composition chimique du fluide liquide est mesurée.

8. Procédé selon les revendications 1 à 4, **caractérisé en ce que** la turbine (8) est régulée en fonction de la zone identifiée et/ou du spectre des gouttes identifié.

9. Procédé selon l'une des revendications précédentes, **caractérisé en ce que** le fluide gazeux (2) comprimé dans le compresseur est de l'air et le fluide liquide (10) injecté dans le fluide gazeux est de l'eau.

10. Installation à turbine à gaz (1) destinée à mettre en oeuvre le procédé selon l'une des revendications 1 à 8, comprenant un compresseur (3) muni d'une chambre de compression, une chambre de combustion (6), une turbine (8) et un système d'air de refroidissement, **caractérisée en ce que** des détecteurs de liquide (11) sont présents le long de la paroi intérieure du compresseur (3), de la surface de l'arbre du compresseur (3), de la surface de l'aubage du compresseur (3) et/ou sur une paroi du système d'air de refroidissement.

11. Installation à turbine à gaz (1) selon la revendication 10, **caractérisée en ce que** les détecteurs de liquide (11) sont montés à fleur de la surface de la paroi de la chambre de compression et/ou du système d'air de refroidissement.

12. Installation à turbine à gaz (1) selon la revendication 10 ou 11, **caractérisée en ce que** les détecteurs de liquide (11) sont des détecteurs d'eau qui fonctionnent selon le principe de mesure de la conductivité.

13. Installation à turbine à gaz (1) selon la revendication 10 ou 11, **caractérisée en ce que** les détecteurs de liquide (11) présents dans le compresseur (3) sont des instruments de mesure destinés à déterminer la taille des gouttes de la phase liquide de l'écoulement à deux phases.

14. Installation à turbine à gaz (1) selon la revendication 13, **caractérisée en ce que** les instruments de mesure destinés à déterminer la taille des gouttes sont un diffractomètre, un anémomètre Doppler à phases ou un appareil de speckle à laser.

15. Installation à turbine à gaz (1) selon les revendications 10 à 14, **caractérisée en ce que** les détecteurs de liquide (11) sont montés de manière amovible dans la chambre de compression et/ou dans le système d'air de refroidissement.

16. Installation à turbine à gaz (1) selon les revendications 10 à 14, **caractérisée en ce que** les détecteurs de liquide (11) sont montés sur le pourtour de la paroi de la chambre de compression.

17. Installation à turbine à gaz (1) selon les revendications 10 à 14, **caractérisée en ce que** les détecteurs de liquide (11) sont reliés avec une unité d'evaluation ou une unité de surveillance du système (13).
